# EUROPEAN PATENT SPECIFICATION

(11) **EP 1 051 064 B1**
(45) Date of publication and mention of the grant of the patent: **02.05.2002**
(21) Application number: 98905174.3
(22) Date of filing: 27.02.1998
(51) Int. Cl.: A01B 15/02

(54) **GROUND WORKING IMPLEMENT INCLUDING A SHANK AND A TIP**
BODENBEARBEITUNGSGERÄT MIT STIEL UND SPITZE
OUTIL POUR TRAVAILLER LA TERRE COMPRENANT UN CORPS ET UNE EXTREMITE

(30) Priority: 27.02.1997 US 810912
(43) Date of publication of application: 15.11.2000
(73) Proprietor: Halford, Christopher J., Saskatchewan S0G 2K0 (CA); Halford, James W., Saskatchewan S0G 2K0 (CA)
(72) Inventor: Halford, Christopher J., Saskatchewan S0G 2K0 (CA); Halford, James W., Saskatchewan S0G 2K0 (CA)
(74) Representative: Pratt, David Martin
(86) International application number: CA9800147
(87) International publication number: WO9837749

(56) References cited:
- GB-A- 678 382
- US-A- 3 002 574
- US-A- 3 386 517
- US-A- 4 415 042

## Description

This invention relates to a ground working implement for an agricultural machine of the type comprising a shank which is mounted at an upper end onto a shank support of the agricultural machine and includes a lower portion for receiving a tip thereon.

It is known to provide shanks of this type in the form of a vertical plate defined by a flat metal plate which is cut so that one edge of the flat plate defines a leading edge of the shank and the opposite edge of the flat plate defines a trailing edge with two side surfaces of the flat plate defining sides of the shank.

More conventional types of shank include cast metal elements of various shapes and a flat metal strip which has the flat side facing forwardly and is generally curved in side elevation to form a C-shape.

Various techniques are used for mounting a tip at the lower end of the shank. In many cases the tip includes a plate parallel to the lower end of the shank which is simply bolted to the shank. Other arrangements include various forms of cast metal tip often with a pocket so that a lower end of the shank is received within the pocket with the tip being held in place by close fit between the pocket and the lower end of the shank as well as a pin or bolt.

Various examples of tips of the cast metal type are manufactured by Bourgault and Flexicoil in Canada.

Other techniques for attachment of the tip to the shank include separate attachment pieces which are generally cast and are attached to the lower end of the shank and receive various tips which include elements for engagement into a pocket defined by the attachment piece.

Various arrangements of this type are shown in U.S. Patents 5,224,555 (Bain) issued July 6, 1993; 4,932,478 (Jones) issued June 12, 1990; 5,310,009 (Rowlett) issued May 10, 1994; 5,077,918 (Garman) issued January 7, 1992 and 306,895 (Ball) issued October 21, 1884.

Other prior art is disclosed in British Patent 678382 of Frank Wade Ltd which discloses a tip on a plough share where the tip includes a projection received within a pocket on the lower end of a shank.

In US Patent 4415042 of Cosson issued Nov 15^{th} 1983 is disclosed an arrangement as set forth in the pre-characterizing part of claim 1 herein.

It is one object of the present invention to provide an improved ground working implement.

Accordingly the invention is characterized in that:
both the lower portion (13) and the tip (11) are arranged such that the two flat side surfaces (20A,20B,28,29) define sides thereof and such that leading and trailing edges (18,19,26,27) of the lower portion and the tip are defined by cut edges of the respective flat plate;
the pocket comprises a recess (43) cut in the flat plate of either the lower portion or of the tip such that front and rear surfaces (44,45) of the recess are defined by cut edges of the flat plate of the lower portion or the tip;
and there are two parallel spaced enclosure members (50,51) defining sides of the recess, each enclosure member being attached to a respective flat side surface of the flat plate of the lower portion or of the tip so as to at least partly span the recess.

One embodiment of the invention will now be described in conjunction with the accompanying drawings in which:

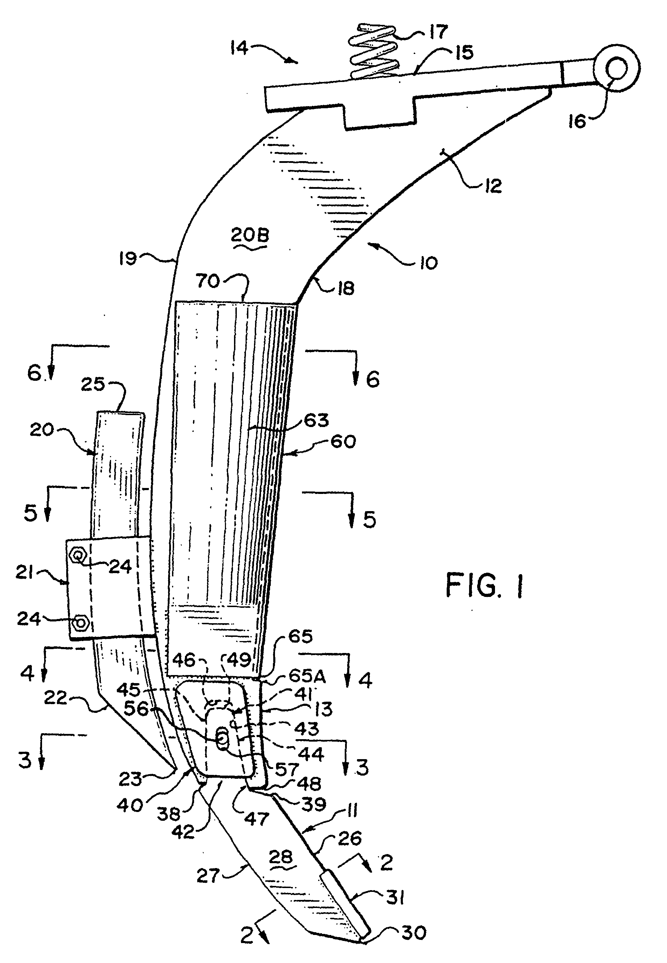

Figure 1 is a side elevational view of a ground working implement according to the present invention.

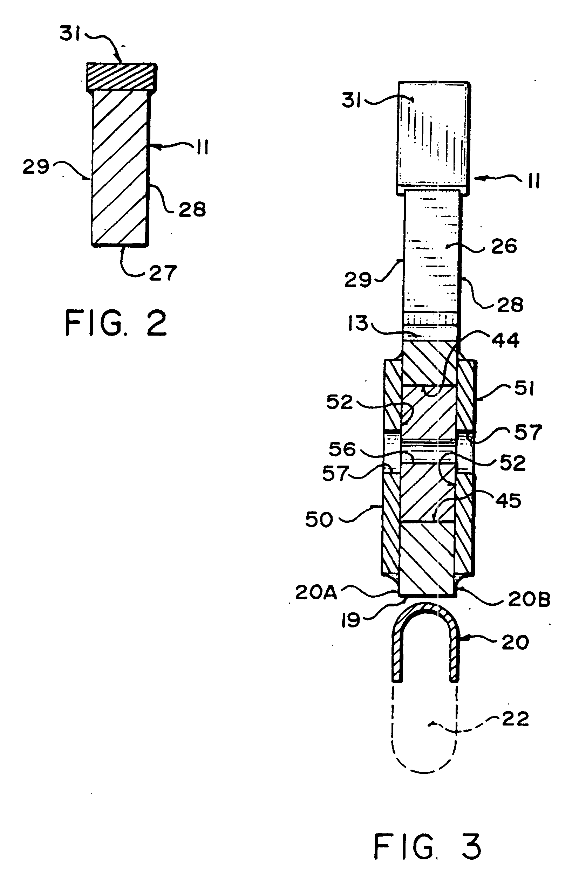

Figure 2 is a cross sectional view along the lines 2-2 of Figure 1.
Figure 3 is a cross sectional view along the lines 3-3 of Figure 1.
Figure 4 is a cross sectional view along the lines 4-4 of Figure 1.
Figure 5 is a cross sectional view along the lines 5-5 of Figure 1.
Figure 6 is a cross sectional view along the lines 6-6 of Figure 1.

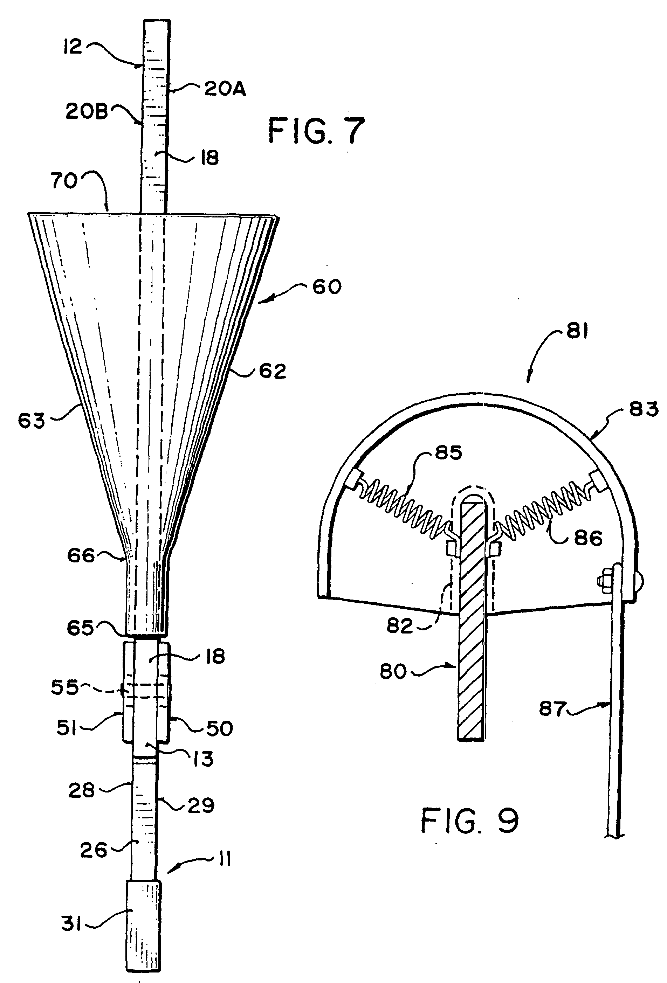

Figure 7 is a front elevational view of the ground working implement of Figure 1.
Figure 8 is a side elevational view similar to that of figure 1 showing a modified ground working implement according to the present invention.
Figure 9 is a cross sectional view along the lines 9-9 of Figure 8.

The ground working implement shown in the figures comprises a shank 10 and a replaceable tip 11. The shank 10 extends from an upper mounting portion 12 to a lower portion 13 for attachment to the replaceable tip 11.

The upper mounting portion 12 is attached to suitable support of an agricultural machine, which support is not shown in detail as this can vary with requirements and is well known to one skilled in the art. For example the support can be fixed or can be a pivotal trip arrangement 14 biased by a spring or by a hydraulic action. The trip arrangement is shown including a bracket assembly 15 for attachment to the upper end 12, a pivot section 16 which allows pivotal movement of the trip and shank about a horizontal axis transverse to the direction of movement of the agricultural machine and a spring 17 for applying downward pressure on the shank and allowing upward release or trip movement of the shank in response to engagement with an obstacle in the ground.

Both the shank 10 and the replaceable tip 11 are defined by a flat metal plate. In the embodiment shown the plate defining the shank is equal in thickness to the plate defining the tip and this is the preferred arrangement although this is not essential to the construction.

The shank 10 thus includes a front or leading edge 18 and a trailing edge 19 both of which are made by cutting to shape from the flat metal sheet or plate defining the material of the shank. Thus side surfaces 20A and 20B of the plate define side surfaces of the shank. The width of the shank from the leading surface 18 to the trailing surface 19 is greater than the thickness of the shank. In this way the shank is substantially rigid in the front to back direction and is resistant to bending or damage due to impact with obstacles. Attached to the trailing surface 19 is an optional delivery tube 20 carried on a bracket 21 welded to the surface 19 at a position spaced upwardly from the bottom end of the shank. The tube 20 includes a rearwardly facing mouth 22 which is inclined downwardly and forwardly to a forward most apex 23 just behind the lower edge of the shank. The bracket 21 wraps around the tube 20 and is clamped thereto by bolts 24. The tube can be arranged for attachment to a supply tube for supplying seed or fertilizer as required for passage through an open upper mouth 25 of the tube.

The replaceable tip 11 is similarly manufactured from the flat plate to define a leading edge 26 and a trailing edge 27 together with side surfaces 28 and 29. The replaceable tip is aligned with the shank so that the side surfaces 28 and 29 lie in a common vertical plane with the side surfaces 20A and 20B of the shank. The replaceable tip converges forwardly and downwardly to a leading edge 30 which thus defines a knife for engaging into the ground and forming a furrow. Along the leading surface 26 is provided a wear plate 31 formed of a wear resistant material which is welded into place along a recess in the leading surface 26. The length and arrangement of the wear insert and the shape of the tip can vary significantly depending upon requirements.

The engagement of the tip with the lower end of the shank is effected by a pair of engagement elements generally indicated at 40. These include a pocket 41 and a projecting insert 42. The pocket 41 is comprised of a recess 43 cut into the lower end of the shank so as to define front and rear surfaces 44 and 45 of the recess together with an upper most surface of the recess indicated at 46. The front and rear surfaces 44 and 45 taper gradually and constantly from an open mouth 47 at a lower face 48 of the shank upwardly and inwardly to the base 46 which is thus narrower than the open mouth 47.

The projection 42 is similarly shaped with front and rear surfaces which taper at the same rate as those of the recess and converge to an upper edge 49 of the projection which is spaced from the base 46 so that the projection can be wedged in place within the recess. This leaves shoulders 38 and 39 on either side of the projection 42 which are slightly spaced downwardly from the lower most surface 48 of the shank.

The pocket 41 is closed on each side by a pair of plates 50 and 51 each arranged on a respective side of the shank and covering the recess. The plates 50 and 51 have inside surfaces 52 which are flat and which lie flat against the side surfaces 20A and 20B of the shank. This defines sides of the recess which thus substantially contact sides of the projection of the tip so that projection is held in place within the recess by a close fit. A slight clearance can be provided by slightly spacing the plates 50 and 51 outwardly from the side surfaces of the shank to ensure that manufacturing tolerances do not prevent the projection from engaging into the recess.

The projection is locked into the recess by a transverse pin 55 which engages through a circular hole 56 in the projection 42. Holes 57 in the side plates 50 and 51 are oval so as to be necessarily aligned with the circular hole when the surfaces of the projection are wedged in place within the surfaces of the recess. The fact that the pin is therefore loose within the holes 57 allows some vertical movement of the tip relative to the shank but in operation the upward force on the tip forces the projection of the tip into the recess so that the location of the tip is defined by the wedging action of the projection within the recess rather than the location of the pin 55.

In an alternative arrangement (not shown) the pocket can be provided on the tip and the projection on the shank. However this is not preferred since the tip is replaceable and therefore is manufactured as simply as possible as shown in the illustrated embodiment.

The shank and the tip are preferably defined by laser cutting of the leading and trailing edges so as to provide an accurate shape with that shape being variable simply by reprogramming the operation of the laser cutter. However other types of cutting and/or punching of a plate material can also be used. Laser cutting is particularly preferred for lower numbers of production. However if numbers are sufficient tooling can be manufactured for direct punching of the required shape.

The shank and the tip are thus made from the flat plate which is aligned so that the plane of the flat plate lies in the direction of movement of the agricultural machine. The shank is thus relatively narrow and can in some cases therefore avoid collecting material in front of the shank. However in situations where significant level of trash, that is remaining crop material is present in and on the soil, a guide surface is provided in front of the shank so as to assist in discarding the trash and preventing the trash from collecting in front of the upper part of the shank. The guide surface is indicated at 60 and comprises a generally U shaped wall with a base of the U forming a leading edge and two legs of the U extending rearwardly on each side of the shank.

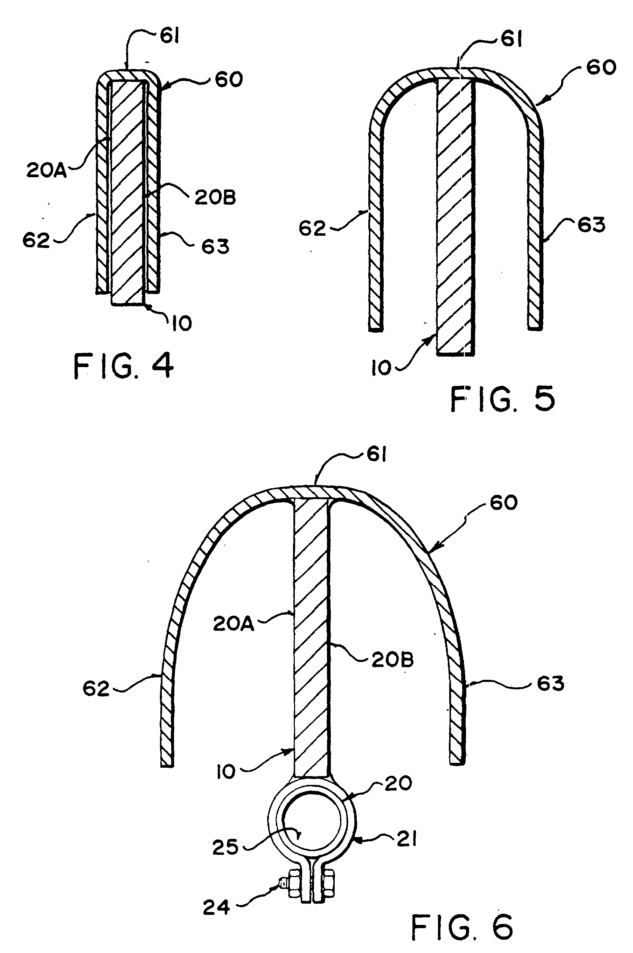

Thus in cross section as shown in Figures 4, 5 and 6, the base of the U shape is indicated at 61 and the two legs are indicated at 62 and 63. It will be appreciated therefore that the U shape member is relatively elongate so as to extend from a position just above the side plates 50 and 51 to a position spaced upwardly from the lower end of the shank at a height sufficient on the shank to engage any crop materials or trash carried in front of the shank.

At the lower most end of the guide 60, the legs 62 and 63 are clamped inwardly so that they lie closely adjacent the side surfaces 20A and 208 of the shank 10. The lowermost edge of the guide as indicated at 65 is welded to the side surfaces 20A and 20B so as to hold the guide in place on the shank.

As best shown in Figure 4, the lower part of the guide includes a section in which the leg 62 and 63 are parallel such that each lies alongside the side surfaces of the shank. This section extends from the lower most edge 65 up to a first junction 66. From that point the guide flares outwardly so that the legs 62 and 63 gradually increase in spacing as indicated in Figures 5 and 6. The leading edge or base of the U shape member or channel as indicated at 61 is curved in cross section as shown in Figures 5 and 6. The guide can also be shaped so that it starts to increase in width directly at the lower edge 65 without the parallel portions of the legs. The front edge of the shank has a recess or shoulder 65A so that the leading edge of the shank above the tip is contiguous with the leading edge of the guide at the lower edge 65.

This shape of the guide surface causes crop material which initially wraps around the lower part between the points indicated at 65 and 66 to gradually move up the shank and to be discarded in view of the fact that the curvature of the leading edge 61 gradually increases thus reducing the likelihood of the material hanging up on that leading edge. Thus there is a tendency for the crop material to rise up or ride up the front edge of the shank and for that material to be discarded as it reaches the upper edge 70 of the guide.

In an alternative arrangement (not shown), the shank itself can be shaped in this manner rather than being formed of the single flat plate so that the upper part of the shank is defined in effect by the guide surface and the lower part of the shank is defined by the flat plate allowing its attachment to the replaceable tip as previously described. The guide can also be used with a shank which is manufactured by conventional techniques and does not use the plate type construction described above.

The arrangement as described above provides the following features:
1. It provides considerable strength in that the manufacture can utilize plate steels of high wear resistance and strength.
2. It is inexpensive to vary the design of either the shank or the tip since the cutting action can be effected by torch, plasma or laser using computer design techniques. Stamping or punching of the parts from a plate can also be used.
3. The manufacture avoids the heavy start up costs of tooling for casting molds and the like.
4. A large number of different tip shapes can be developed to fit varying seeding, tillage, fertilizing and insecticide injection requirements.
5. The width of the tip and the width of the shank can be relatively narrow lying in the range 0.125 to 1.00 inch or greater.
6. The attachment of the tip to the shank can be effected by the tapered wedging action described above, by a curve shape or by rectangular or parallel sides arrangement.
7. The side plates welded to the shank can be reduced in height if required in dependence upon the expected forces and finished ground shape required.
8. Various additions can be made to the tips to widen furrows, reduce wear behind openers on delivery tubes etc..
9. The tip can be made into a tillage tool by bolting or welding on a horizontal wing sections.
10. The lower portion of the shank can be provided as a separate section which can be bolted to another portion of the shank.

In a further alternative arrangement, the shank can be of a conventional design on which a lower portion is added as a bolt-on conversion section onto which the tip mounts. The conversion section and the tip are then defined by the plate arrangement as described hereinbefore. The lower portion does not therefore need to be an integral part of the upper part of the shank but it can be seperately manufactured and attached thereto.

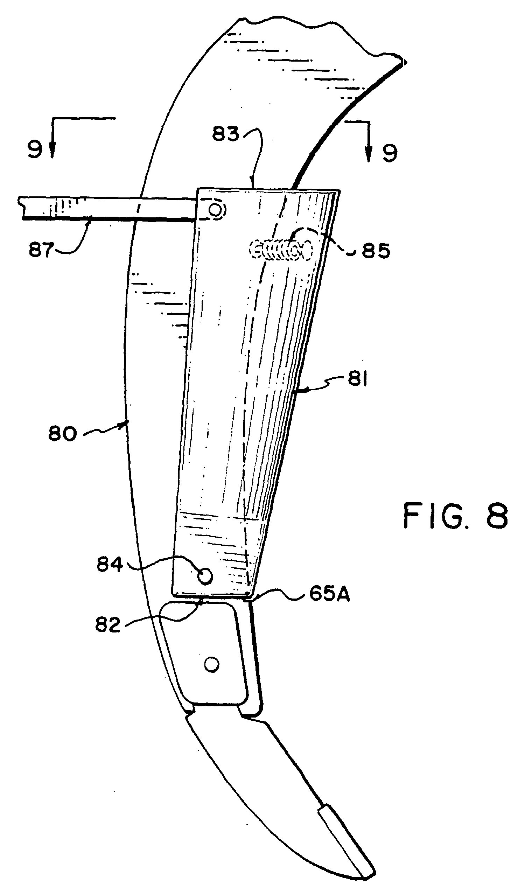

Turning now to Figures 8 and 9, there is shown a further shank construction which is preferably of the plate type previously described but can be of any other shank type. The shank is generally indicated at 80 and includes a cover member 81 which is similar to the cover member 60 previously described. In this arrangement, however, the cover tapers continuously from a lower edge 82 up to an upper edge 83 so that the cover gradually increases in width and the radius of curvature of the front edge of the cover gradually increases to provide a crop shedding action as previously described.

Instead of the cover 81 being welded to the shank, in this case the cover 81 is attached to the shank by a bolt 84 which allows some pivotal movement of the cover about an axis defined by the transverse bolt 84 passing through the shank. The bolt is arranged near the lower edge 82 so that the lower edge is substantially fixed and received within the recess 65A as previously described. However the upper edge 83 can move forwardly and rearwardly relative to the shank and in addition can move slightly from side to side relative to the shank due to a relatively loose fit on the transverse bolt 84. In order to maintain the cover in position in front of the shank and relatively centered on the shank, the cover is attached by a pair of rubber or spring couplings 85 and 86 which extend from a position adjacent the front edge of the shank outwardly and forwardly to a respective mounting points on the cover. Thus the springs pull the cover backwardly toward the front edge of the shank but allow some forward movement and allow some side to side shaking movement.

In one embodiment, therefore, the cover is in effect loosely mounted on the shank so that it can float in various directions as the shank moves or vibrates to assist trash from being released from the front surface of the cover.

In addition, or alternatively, the cover can be attached to a linkage generally indicated at 87 which extends from the cover to a movable element of the agricultural machine for example trailing packer wheels or other opener members which will generate sharp forces on the cover member and cause it to snap forward and/or sideways helping to dislodge residues or trash. One example of a seeding device of this general type is shown in prior Canadian Patent 1239835 issued 2nd Aug. 1988 of James W. Halford (one of the present inventors) in which the shank is trailed by an attached packer wheel which is allowed some movement relative to the shank. The connection of the linkage 87 therefore to the trailing packer wheel will cause some shaking or more vigorous movement of the cover member relative to the front surface of the shank to assist in discarding the trash.

## Claims

1. A ground working implement for an agricultural machine comprising:
a shank (10) including an upper mounting portion (12) for attachment to a shank support of the agricultural machine and a lower portion (13) spaced downwardly of the upper mounting portion;
and a replaceable tip (11) arranged for mounting on the lower portion for support thereby for movement therewith across the ground and for engagement into the ground in a ground working action;
the lower portion (13) of the shank (10) and the tip (11) including cooperating engagement elements (41,42) by which the tip is attached to the lower portion of the shank;
the engagement elements comprising a pocket (43) on either the lower (13) portion or the tip (11) and a projection (42) for engagement into the pocket on the other of the lower portion and the tip;
at least the lower portion (13) of the shank being defined by a first flat plate of substantially constant thickness between two flat side surfaces (20A,20B) of the first flat plate;
at least part of the tip (11) being defined by a second flat plate of substantially constant thickness between two flat side surfaces (28,29) of the second flat plate;
**CHARACTERIZED IN THAT**:
both the lower portion (13) and the tip (11) are arranged such that the two flat side surfaces (20A,20B,28,29) define sides thereof and such that leading and trailing edges (18,19,26,27) of the lower portion and the tip are defined by cut edges of the respective flat plate;
the pocket comprises a recess (43) cut in the flat plate of either the lower portion or of the tip such that front and rear surfaces (44,45) of the recess are defined by cut edges of the flat plate of the lower portion or the tip;
and there are two parallel spaced enclosure members (50,51) defining sides of the recess, each enclosure member being attached to a respective flat side surface of the flat plate of the lower portion or of the tip so as to at least partly span the recess.

2. The ground working implement according to Claim 1 wherein the first and second flat plates are of equal thickness and wherein the two enclosure members (50,51) have surfaces facing inwardly into the recess which are flat and coplanar with the flat side surfaces of the plate.

3. The ground working implement according to Claim 1 or 2 wherein each enclosure member (50,51) extends substantially fully across a respective side of the recess (43) so as substantially to fully cover the side of the recess and provide an open mouth of the recess only at an end face thereof.

4. The ground working implement according to claim 1, 2 or 3 wherein the enclosure members (50,51) are welded to the side surfaces (20A,20B).

5. The ground working implement according to Claim 1, 2, 3 or 4 wherein the pocket (43) is on a bottom end of the lower portion (13) of the shank and the projection is on an upper end of the tip (11).

6. The ground working implement according to any preceding claim wherein the shank is shaped at the lower portion (13) such that a width thereof from the leading edge (18) to the trailing edge (19) is greater than the thickness of the flat plate.

7. The ground working implement according to any preceding claim wherein the projection (42) and the pocket (43) each have front and rear surfaces (44,45) which are similarly tapered.

8. The ground working implement according to any preceding claim wherein the shank (10) includes a guide cover (60) extending from the lower portion (13) upwardly toward the upper mounting portion (12), the guide cover comprising a sheet member curved so as to be U-shaped (61,62,63) in horizontal cross-section thus defining a curved leading wall (61) surrounding the leading edge of the shank and two side walls (62,63) each adjacent to a respective side surface of the shank, the guide cover (60) having at its lower end each side wall thereof arranged immediately alongside and parallel to the respective side surface of the shank to define a narrow width of the cover at the lower end; and the guide cover increasing in width transversely of the shank from the narrow width at the lower end to an increased width upwardly from the lower end.

## Patentansprüche

1. Bodenbearbeitungsgerät für eine landwirtschaftliche Maschine, umfassend:
einen Schaft (10), welcher einen oberen Befestigungsabschnitt (12) zur Befestigung an einer Schafthalterung der landwirtschaftlichen Maschine und einen unteren Abschnitt (13), welcher in Abstand unterhalb des oberen Befestigungsabschnitts angeordnet ist, umfaßt;
und eine auswechselbare Spitze (11), welche zum Anbringen an dem unteren Abschnitt zur Befestigung dadurch zur Bewegung damit über den Boden und zum Eingriff in den Boden in einem Bodenbearbeitungsabschnitt geeignet eingerichtet ist;
wobei der untere Abschnitt (13) des Schafts (10) und die Spitze (11) zusammenwirkende Eingriffselemente (41, 42) umfassen, durch welche die Spitze an dem unteren Abschnitt des Schafts befestigt wird;
die Eingriffselemente eine Aussparung (43) an dem unteren Abschnitt (13) oder der Spitze (11) und einen Vorsprung (42) zum Eingriff in dem Hohlraum an dem unteren Abschnitt bzw. der Spitze, welcher bzw. welche das jeweils andere Element ist, umfassen;
mindestens der untere Abschnitt (13) des Schafts durch eine erste ebene Platte im wesentlichen konstanter Dicke zwischen zwei ebenen Seitenflächen (20A, 20B) der ersten ebenen Platte definiert ist;
mindestens ein Teil der Spitze durch eine zweite ebene Platte im wesentlichen konstanter Dicke zwischen zwei ebenen Seitenflächen (28, 29) der zweiten ebenen Platte definiert ist;
**DADURCH GEKENNZEICHNET, DASS**:
sowohl der untere Abschnitt (13) als auch die Spitze (11) derart angeordnet sind, daß die zwei ebenen Seitenflächen (20A, 20B, 28, 29) Seiten davon definieren, und derart, daß Leit- und Folgekanten (18, 19, 26, 27) des unteren Abschnitts und der Spitze durch Schnittkanten der jeweiligen ebenen Platte definiert sind;
die Aussparung eine Vertiefung (43) umfaßt, welche in die ebene Platte des unteren Abschnitts oder der Spitze geschnitten ist, so daß die vordere und die hintere Fläche (44, 45) der Vertiefung durch Schnittkanten der ebenen Platte des unteren Abschnitts bzw. der Spitze definiert sind;
und zwei parallel in Abstand angeordnete Einschlußelemente (50, 51) vorhanden sind, welche Seiten der Vertiefung definieren, wobei jedes Einschlußelement an einer jeweiligen ebenen Seitenfläche der ebenen Platte des unteren Abschnitts bzw. der Spitze derart befestigt ist, daß dieses die Vertiefung zumindest teilweise überspannt.

2. Bodenbearbeitunsgerät nach Anspruch 1, wobei die erste und die zweite ebene Platte von gleicher Dicke sind und wobei die zwei Einschlußelemente (50, 51) Flächen aufweisen, welche nach innen in die Vertiefung weisen und welche eben und koplanar zu den ebenen Seitenflächen der Platte sind.

3. Bodenbearbeitungsgerät nach Anspruch 1 oder 2, wobei sich jedes Einschlußelement (50, 51) im wesentlichen vollständig über eine jeweilige Seite der Vertiefung (43) erstreckt, so daß dieses die Seite der Vertiefung im wesentlichen vollständig bedeckt und ein offenes Mundstück der Vertiefung lediglich bei einer Endseite davon liefert.

4. Bodenbearbeitungsgerät nach Anspruch 1, 2 oder 3, wobei die Einschlußelemente (50, 51) an die Seitenflächen (20A, 20B) geschweißt sind.

5. Bodenbearbeitungsgerät nach Anspruch 1, 2, 3 oder 4, wobei sich die Aussparung (43) an einem unteren Ende des unteren Abschnitts (13) des Schafts befindet und sich der Vorsprung an einem oberen Ende der Spitze (11) befindet.

6. Bodenbearbeitungsgerät nach einem beliebigen vorangehenden Anspruch, wobei der Schaft an dem unteren Abschnitt (13) derart gestaltet ist, daß die Breite davon von der Leitkante (18) zu der Folgekante (19) größer als die Dicke der ebenen Platte ist.

7. Bodenbearbeitungsgerät nach einem beliebigen vorangehenden Anspruch, wobei der Vorsprung (42) und die Aussparung (43) jeweils eine vordere und eine hintere Fläche (44, 45) aufweisen, welche in ähnlicher Weise keilförmig angeordnet sind.

8. Bodenbearbeitungsgerät nach einem beliebigen vorangehenden Anspruch, wobei der Schaft (10) eine Führungsbedeckung (60) umfaßt, welche sich von dem unteren Abschnitt: (13) ausgehend nach oben zu dem oberen Befestigungsabschnitt (12) hin erstreckt, wobei die Führungsbedeckung ein Blechelement umfaßt, welches derart gekrümmt ist, daß dieses im horizontalen Querschnitt U-förmig (61, 62, 63) ist, so daß eine gekrümmte Führungswand (61), welche die Leitkante des Schafts umgibt, und zwei Seitenwände (62, 63) definiert werden, welche jeweils neben einer jeweiligen Seitenfläche des Schafts angeordnet sind, wobei bei dem unteren Ende der Führungsbedeckung (60) jede Seitenwand davon unmittelbar neben und parallel zu der jeweiligen Seitenfläche des Schafts angeordnet ist, um eine schmale Breite der Bedeckung bei dem unteren Ende zu definieren; und wobei die Breite der Führungsbedeckung quer zu dem Schaft von der schmalen Breite bei dem unteren Ende zu einer vergrößerten Breite oberhalb des unteren Endes anwächst.

## Revendications

1. Outil de travail du sol pour une machine agricole comprenant :
. un bras (10) comportant une partie de montage supérieure (12) pour la fixation à un support de bras de la machine agricole et une partie inférieure (13) distante vers le bas de la partie de montage supérieure ; et
. un embout interchangeable (11) destiné à être monté sur la partie inférieure pour supporter par ce moyen son mouvement à travers et son engagement dans le sol selon une action de travail du sol;
la partie inférieure (13) du bras (10) et l'embout interchangeable (11) comportant des éléments d'engagement (41, 42) par lesquels l'embout est fixé à la partie inférieure du bras;
les éléments d'engagement étant formés d'une cavité (43) située soit sur la partie inférieure (13) soit sur l'embout (11) et d'une partie en saillie (42) pour l'engagement dans la cavité sur l'autre partie inférieure et l'embout ;
au moins la partie inférieure (13) du bras étant constituée par une première plaque plane d'épaisseur sensiblement constante entre deux surfaces latérales planes (20A, 20B) de la première plaque ;
au moins une partie de l'embout (11) étant constituée par une seconde plaque plane d'épaisseur sensiblement constante entre deux surfaces latérales planes (28, 29) de la seconde plaque ;
**caractérisé en ce que** :
à la fois la partie inférieure (13) et l'embout (11) sont disposés de façon que les deux surfaces latérales planes (20A, 20B, 28, 29) délimitent les côtés de celui-ci et de façon à ce que les bords d'attaque et les bords longitudinaux (18, 19, 26, 27) de la partie inférieure et de l'embout soient délimités par des tranchants de la plaque plane respective ;
**en ce que** la cavité comprend une partie en retrait (43) découpée dans la plaque plane soit de la partie inférieure, soit de l'embout, de façon que les surfaces frontale et arrière (44, 45) de la partie en retrait soient délimitées par des bords tranchants de la plaque plane de la partie inférieure ou de l'embout ; et
**en ce que** deux éléments d'enveloppe (50, 51) distants parallèles délimitent les côtés de la partie en retrait, chaque élément d'enveloppe étant fixé à une surface plane respective de la plaque plane de la partie inférieure ou de l'embout de façon à traverser au moins partiellement la partie en retrait.

2. Outil pour le travail du sol selon la revendication 1, **caractérisé en ce que** la première et la seconde plaque plane sont d'épaisseur égale et **en ce que** les deux éléments d'enveloppe (50, 51) présentent des surfaces tournées vers l'intérieur à l'intérieur de la partie en retrait et sont planes et coplanaires avec les surfaces latérales planes de la plaque.

3. Outil pour le travail du sol selon la revendication 1 ou 2, **caractérisé en ce que** chaque élément d'enveloppe (50, 51) s'étend sensiblement complètement à travers une face respective de la partie en retrait (43) de manière à couvrir sensiblement complètement la face de la partie en retrait et à former une ouverture à la partie en retrait uniquement sur la face d'extrémité de celle-ci.

4. Outil pour le travail de la terre selon la revendication 1, 2 ou 3, **caractérisé en ce que** les éléments d'enveloppe (50, 51) sont soudés aux surfaces latérales (20A, 20B).

5. Outil pour le travail de la terre selon la revendication 1, 2, 3 ou 4, **caractérisé en ce que** la cavité (43) est située sur l'extrémité du fond de la partie inférieure (13) du bras et **en ce que** la saillie est située sur l'extrémité du dessus de l'embout (11).

6. Outil pour le travail du sol selon l'une quelconque des revendications précédentes, **caractérisé en ce que** le bras est conformé au niveau de la partie inférieure (13) de façon que sa largeur, du bord d'attaque (18) au bord longitudinal (19), soit supérieure à l'épaisseur de la plaque plane.

7. Outil pour le travail du sol selon l'une quelconque des revendications précédentes, **caractérisé en ce que** la saillie (42) et la cavité (43) présentent chacune des surfaces frontale et arrière (44, 45) chanfreinées de manière similaire.

8. Outil pour le travail du sol selon l'une quelconque des revendications précédentes, **caractérisé en ce que** le bras (10) comporte un capot de guidage (60) se prolongeant de la partie inférieure (13) vers le haut vers la partie de montage supérieure (12), le capot de guidage comprenant un élément en feuille incurvé de façon à présenter une section droite horizontale en forme de U (61, 62, 63) délimitant ainsi une paroi d'attaque incurvée (61) entourant le bord d'attaque du bras et deux parois latérales (62, 63) adjacentes chacune à une surface latérale respective du bras, les parois latérales de l'extrémité inférieure du capot de guidage (60) étant disposées immédiatement le long et parallèlement à la surface latérale respective du bras pour délimiter une largeur étroite du capot au niveau de l'extrémité inférieure ; et la largeur du capot de guidage augmentant transversalement au bras vers le haut et à partir de l'extrémité inférieure de la largeur étroite qu'il présente à l'extrémité inférieure vers une largeur supérieure.
